# EUROPÄISCHE PATENTSCHRIFT

(11) **EP 1 108 077 B1**
(45) Veröffentlichungstag und Bekanntmachung des Hinweises auf die Patenterteilung: **26.11.2003**
(21) Anmeldenummer: 00941915.1
(22) Anmeldetag: 16.05.2000
(51) Int. Cl.: D01G 23/04

(54) **WIEGEEINRICHTUNG**
WEIGHING DEVICE
DISPOSITIF DE PESAGE

(30) Priorität: 27.05.1999 DE 19924203
(43) Veröffentlichungstag der Anmeldung: 20.06.2001
(73) Patentinhaber: Temafa Maschinenfabrik GmbH, D-51469 Bergisch Gladbach (DE)
(72) Erfinder: SCHOLZ, Erich DI, verstorben (DE); BREUER, Martin, D-51789 Lindlar (DE); HÖCK, Franz, D-51491 Overath (DE); KOHNEN, Bernhard, D-50823 Köln (DE); BEZOUSKA, Thomas, D-69514 Laudenbach (DE); ENGELHARDT, Peter, D-69502 Hemsbach (DE)
(74) Vertreter: Canzler, Rolf, Dipl.-Ing.
(86) Internationale Anmeldenummer: DE0001553
(87) Internationale Veröffentlichungsnummer: WO00073546

(56) Entgegenhaltungen:
- EP-A- 0 122 717
- DE-A- 2 248 522
- DE-B- 1 236 381
- DE-U- 9 218 341
- FR-A- 2 263 498
- US-A- 5 802 674

## Beschreibung

Die Erfindung betrifft eine Wiegeeinrichtung zur fortlaufenden Bestimmung des Flächengewichtes von Fasermaterial in Band- oder Vliesform, das aus einer vorgeschalteten faserverarbeitenden Maschine oder einem Fasermaterialbehälter der Wiegeeinrichtung zugeführt und von dieser zu einer nachfolgenden faserverarbeitenden Maschine oder Fasermaterialablage abgeführt wird.

Derartige Gewichtsmeßvorrichtungen sind aus dem Stand der Technik verschiedentlich bekannt. Das Fasermaterial wird über ein im wesentlichen horizontal angeordnetes Transportband geleitet, unter welchem eine Wiegevorrichtung angeordnet ist. So wird in der EP 0635 589 A1 eine elektronische Bandwaage beschrieben, die der Einzugseinrichtung einer Krempel oder Karde vorgeschaltet ist. Die Fasermatte wird dabei auf einem endlos umlaufenden Band zur Einzugseinrichtung der Karde befördert, wobei sich in der Mitte unterhalb des die Fasermatte tragenden umlaufenden Bandes eine Meßeinrichtung 14 befindet, die das Fasermattengewicht auf einer Wägestrecke A ermittelt. Über einen Soll-Istwert-Vergleich wird die Band- oder Vliesgeschwindigkeit gesteuert, so daß die zugeführte Spinngutmenge dem gewünschten Flächen- bzw. Bandgewicht des Endproduktes angepaßt ist. Der Sollwert für das Flächen- bzw. Bandgewicht kann sich auch auf den Auslauf einer der Fasern verarbeitenden Maschine nachgeordneten Maschine, z.B. auf einen Vliesbandleger beziehen.

Bei dieser Art der Bandgewichtsermittlung treten jedoch Fehler dadurch auf, daß die Belastung der unter dem Band angeordneten Wiegeeinrichtung von der Elastizität und Spannung des das Fasergut transportierenden Bandes beeinflußt wird.

Um diesen Mangel zu beheben und die Wiegeeinrichtung unabhängig von der Materialzuführung und Abführung zu machen, ist auch bereits vorgeschlagen worden (DE 39 13 733 A1), das Wiegetuch mit der Wiegeeinrichtung unabhängig vom Zuführtisch zu machen, und zwar in der Weise, daß das Wiegetuch mit seiner Antriebsvorrichtung insgesamt mit dem darauf lagernden Spinngut gewogen wird, wobei man durch das Abziehen der Tara das Gewicht des Spinngutes ermitteln kann. Dem Wiegetuch folgt, wiederum von diesem getrennt, ein nachgeschalteter Zuführtisch für die nachfolgende Maschine.

Es hat sich gezeigt, daß diese Anordnung nicht befriedigend ist, insbesondere deshalb, weil beim Transport von Fasermassen in Form eines vorverdichteten Vlieses oder Bandes an den Übergängen zwischen dem Transportband des Zuführtisches und dem Wiegetuch sowie dem nachfolgenden Abtransportband eine Brückenbildung auftritt. Diese Brückenbildung bewirkt, daß sich die Fasermasse im Übergangsbereich an dem benachbarten Transportelement abstützt. Dadurch wird das Meßergebnis verfälscht, da sich die Fasermasse, die sich auf dem wiegeband befindet, bedingt durch die Faserreibung und Haftung im Übergangsbereich auf den feststehenden Zu- und Abführbändern abstützen kann. Es kommt somit nicht das volle tatsächliche Gewicht auf der Wiegeeinrichtung zur Wirkung.

Ein weiterer Einflußfaktor an diesen Übergängen zwischen Zuführung auf das Wiegetuch und vom Wiegetuch auf die Abgabe ist durch die Konsistenz des in diesem Bereich liegenden Materials bei der Gewichtserfassung der bekannten Wiegeeinrichtung gegeben. Hat nämlich das gewichtsmäßig zu erfassende Material im Bereich dieser Übergänge die gleiche Dichtigkeit, so kann die für die Antriebsregelung erforderliche aktive Gewichtsmessung durch Anpassung der wirksamen Wiegetuchlänge aufgrund einer Meßreihe ermittelt werden. Ändert sich jedoch diese Konsistenz innerhalb der Übergänge, so wird das erfaßte Auflagegewicht im Verhältnis Länge der Auflage auf das Wiegetuch zu Länge Einflußbereich der Übergänge verändert. Eine Beeinflussung dieser Veränderung ist bei den bekannten Wiegeeinrichtungen nicht möglich, so daß eine konstante Antriebsregelung für die Materialzuführung nur bei gleicher Materialvorgabe möglich ist.

Aufgabe der vorliegenden Erfindung ist es, eine Band- oder Vlieswiegeeinrichtung zu schaffen, die diesen Nachteil der Brückenbildung und die dadurch verursachten Ungenauigkeiten vermeidet.

Diese Aufgabe wird erfindungsgemäß durch die Merkmale des Anspruchs 1 gelöst. Durch die Gestaltung der Wiegeeinrichtung als Balkenwaage entsteht in den Drehpunkten der Wiegearme ein unempfindlicher Bereich für die Materialzufuhr und -abfuhr, während im Bereich der Abstützung der Wiegearme auf das oder die Wiegeelemente ein für die Gewichtsfeststellung empfindlicher Bereich entsteht. Der Wiegearm kann als Rutschfläche für das Fasermaterial ausgebildet sein, jedoch ist es zweckmäßig, daß der Wiegearm ein Transportband aufweist, das den Fasermaterialtransport unterstützt und damit Querkraftelemente, die die Wiegung beeinflussen könnten, ausgeschaltet sind. Bei einer derartigen Ausführung ist es zweckmäßig, als Schwenkachse die Achse der Bandumlenkrolle für das Transportband zu verwenden. Durch die Ausführung gemäß den Merkmalen der Ansprüche 6 oder auch 7 ist es möglich, die Wiegeelemente zu entlasten, so daß für diese wesentlich sensiblere Sensoren verwendet werden können, wodurch eine genauere Wägung erreicht wird. Besonders vorteilhaft ist es, die Wägung so durchzuführen, daß jedes der schwenkbar gelagerten Wiegearme sich auf der einander zugewandten Seite auf einer separaten Wiegeeinrichtung abstützen und die Bestimmung des Band- oder Vliesflächengewichtes aus dem arithmetischen Mittel der beiden gemessenen Werte ermittelt wird. Dadurch wird die Brückenbildung beim Übergang von dem einen Wiegearm auf den anderen Wiegearm optimal kompensiert.

Weitere Einzelheiten der Erfindung werden anhand der Zeichnungen erläutert. Es zeigen
- Figur 1: die erfindungsgemäße Wiegeeinrichtung im Anschluß an einen Kastenspeiser in schematischer Darstellung;
- Figur 2: das Funktionsprinzip der Wiegeeinrichtung;
- Figur 3: das Funktionsprinzip der Wiegeeinrichtung mit Kompensation des Gewichtes des Wiegearmes;
- Figur 4: die Wiegeeinrichtung gemäß Figur 3, angeordnet am Auslauf eines Füllschachtes.

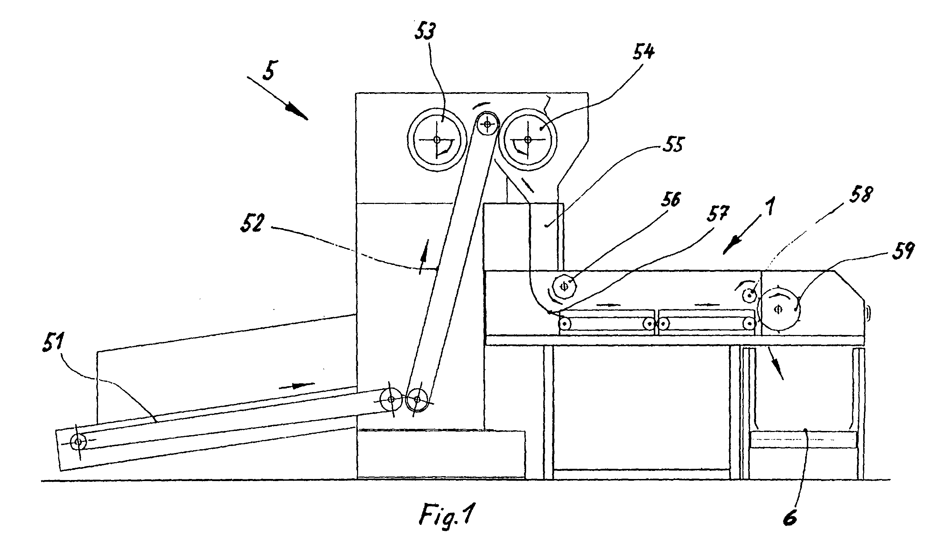

Gemäß Figur 1 ist die Wiegeeinrichtung am Auslauf eines Kastenspeisers 5 angeordnet, bei dem das Fasermaterial über einen Zuführtisch 51 dem Steigförderband 52 zugeführt wird.
Eine Rückstreifwalze 53 sorgt in üblicher Weise dafür, daß das Fasermaterial in bestimmten Quantitäten gefördert und in einem genügenden Auflösungsstatus durch die Abwurfwalze 54 einem Füllschacht 55 zugeführt wird. Am unteren Ausgang des Füllschachtes 55 ist eine Speisewalze 56 angeordnet, die das Fasermaterial über die Speisemulde 57 in verdichteter Form einer Wiegeeinrichtung 1 zuführt, mittels welcher das Flächengewicht kontrolliert wird, so daß über die Abzugswalze 58 eine stets gleichmäßige Fasermaterialmenge durch die Abnahmewalze 59 auf das Transportband 6 abgeworfen wird, welches das Fasermaterial einem weiteren Verarbeitungsprozeß zuführt.

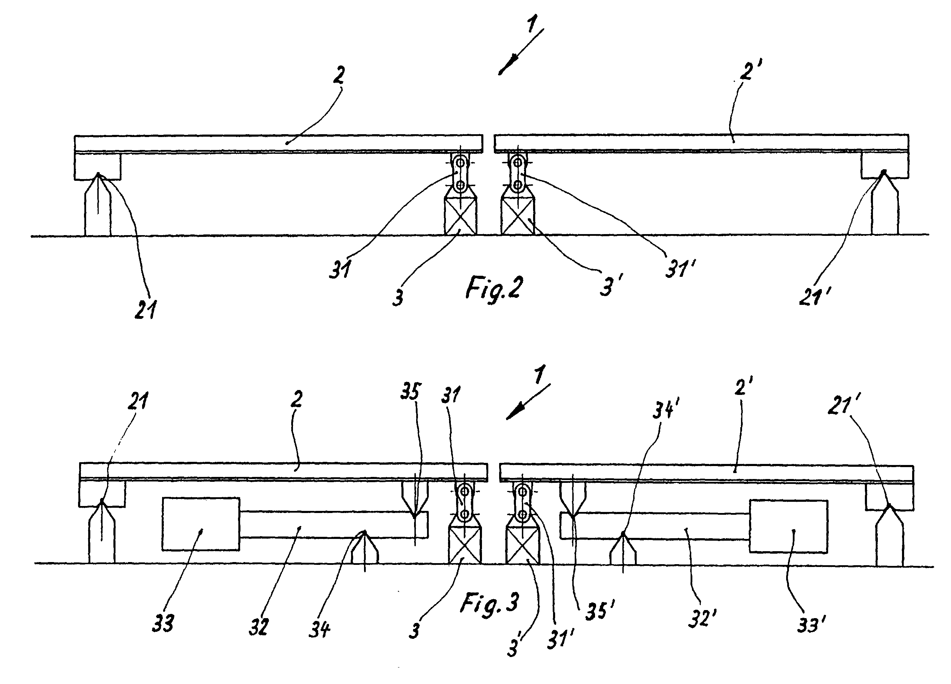

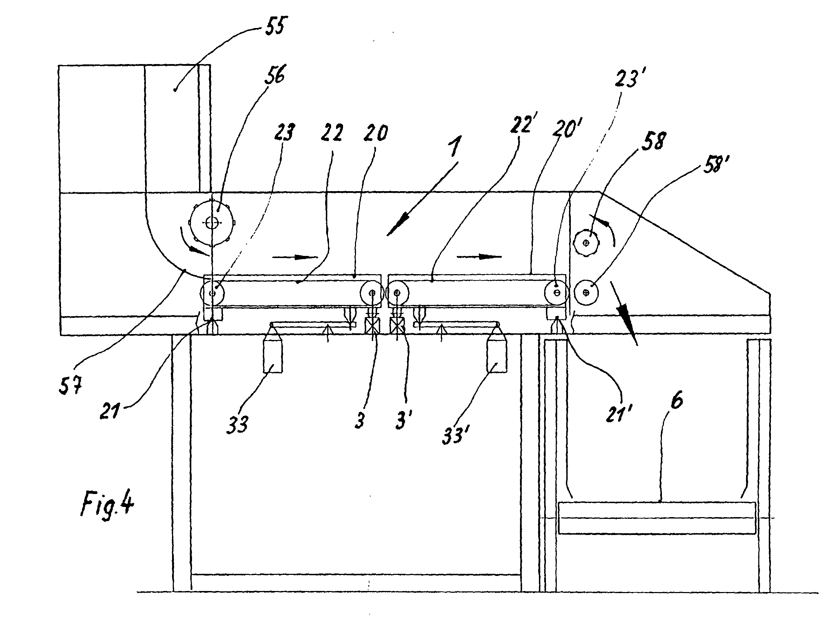

In Figur 2 ist das Prinzip der erfindungsgemäßen Wiegeeinrichtung 1 schematisch dargestellt. Im Anschluß an die Speisewalze 56 und die Speisemulde 57, jedoch von dieser getrennt, ist ein Wiegearm 2 angeordnet, der auf einer Schneidenlagerung 21 sich ortsfest abstützt, jedoch durch diese Schneidenlagerung um den Abstützpunkt 21 schwenkbar gelagert ist. Das andere Ende des Wiegearms 2 stützt sich auf einem Wiegeelement 3 ab, wobei der Wiegearm 2 über eine gelenkige Abstützung 31 mit dem Wiegeelement 3 verbunden ist. Spiegelbildlich zum Wiegearm 2 ist ein weiterer Wiegearm 2' angeordnet, der sich ebenfalls auf einem Wiegeelement 3' über eine gelenkige Abstützung 31' abstützt und schwenkbar an seinem anderen Ende durch ein Schneidenlager 21' gelagert ist. An dieses ortsfest abgestützte Ende des Wiegearms 2' schließt sich eine Abzugswalze 58 an, die mit einer Abnahmewalze 59 zusammenarbeitet, welche das gewogene Fasermaterial auf ein Transportband 6 zur weiteren Verarbeitung abwirft. Wie in Figur 4 dargestellt, kann statt einer Abzugswalze 58 und einer Abnahmewalze 59 auch ein Abzugswalzenpaar 58 und 58' vorgesehen sein.

In Figur 3 ist die Wiegeeinrichtung 1 mit einer das Gewicht des Wiegearms 2 bzw. 2' kompensierenden Ausgleichsvorrichtung versehen. Diese besteht aus einem Waagebalken 32, der auf einer ortsfesten Schneidenlagerung 34 gelagert ist und sich über eine Schneide 35 gegen den Wiegearm 2 abstützt. Die Kompensation des Gewichtes des Wiegearmes 2 erfolgt durch das Kompensationsgewicht 33. Dieses Kompensationsgewicht 33 ist auf dem Waagebalken 32 justierbar angeordnet oder auf andere übliche Weise an das zu kompensierende Gewicht des Wiegearms 2 anpaßbar. Das Wiegeelement 3 hat durch diese Kompensation nur das tatsächliche Fasermaterialgewicht aufzunehmen und kann deshalb wesentlich sensibler ausgeführt werden, als wenn der komplette Wiegearm 2 mit seinem Eigengewicht das Wiegeelement 3 zusätzlich belasten würde.

Grundsätzlich kann der Wiegearm 2 als Gleitfläche für das Fasermaterial ausgeführt sein, jedoch ist es zweckmäßiger, wie in Figur 1 oder 4 gezeigt, auf dem Wiegearm 20 ein Transportband 22 vorzusehen, das über Umlenkrollen 23 geführt und angetrieben ist. Das Fasermaterial erhält auf diese Weise über das Transportband 22 seine Transportbewegung, so daß keine, die Wiegung unter Umständen beeinflussenden Horizontalkräfte wie bei einer Ausführung als Gleitfläche auftreten können. Der Wiegearm 20 kann schwenkbar um die Achse der Umlenkrolle 23 (siehe Figur 1) oder auch mit einer Schneidenlagerung 21 ortsfest gelagert sein. Über diesem ortsfesten Lagerpunkt 21 ist die Speisewalze 56 angeordnet, die das Fasermaterial aus dem Füllschacht 55 auf dieses Transportband 20 befördert. Dadurch, daß durch die Achse der Umlenkrolle 23 oder auch durch ein Schneidenlager 21 eine ortsfeste Abstützung für den Wiegearm 20 gegeben ist, kann sich der Druck der das Fasermaterial verdichtenden Speisewalze nicht auf die Wiegeeinrichtung auswirken. Ebenso ist durch diese Anordnung des Wiegearmes 20 eine unvermeidliche Brückenbildung ohne Einfluß auf das Meßergebnis.

Das Fasermaterial wird von dem Transportband 22 dann auf das zweite Transportband 22' der Wiegeeinrichtung 1 übergeben und zu der Abzugswalze 58 bzw. einem Abzugswalzenpaar 58, 58' zugeführt. Sowohl beim Übergang vom Transportband 22 auf das Transportband 22' als auch zu der Abnahmewalze 58 bzw. dem Abnahmewalzenpaar 58, 58' ist eine Brückenbildung nicht zu vermeiden. Jedoch ist, wie bei der Speisewalze 56, der Einfluß des Materialabzugs durch die ortsfeste Lagerung des Wiegearms 20' für das Meßergebnis ohne Einfluß, während beim Übergang von dem Transportband 22 auf das Transportband 22' die Wiegeelemente (3, 3') die Brückenbildung erfassen, da sich die Fasermaterialmatte des einen Bandes 22 nur auf dem wiegeempfindlichen Bereich des anderen Transportbandes 22' abstützen kann, so daß das Mittel der beiden gemessenen Werte den tatsächlichen Wert ohne Beeinflussung durch die Brückenbildung darstellt. Entsprechend dem jeweils festgestellten Gewicht erfolgt die Regelung der Materialtransportgeschwindigkeit im Bereich der Materialzufuhr, der Wägung und der Materialabfuhr in üblicher Weise.

### Bezugszeichenliste

- 1: Wiegeeinrichtung
- 2,2',20,20': Wiegearm
- 21, 21': ortsfeste Schwenkachse, Schneidenlager
- 22, 22': Wiegetransportband
- 23, 23': Bandumlenkrolle
- 3, 3': Wiegeelement
- 31, 31': gelenkige Abstützung
- 32: Waagebalken
- 33: Kompensationsgewicht
- 34: ortsfestes Schneidenlager
- 35: Schneidenlager am Wiegearm
- 5: Kastenspeiser
- 51: Zuführtisch
- 52: Steigförderband
- 53: Rückstreifwalze
- 54: Abwurfwalze
- 55: Füllschacht
- 56: Speisewalze
- 57: Speisemulde
- 58, 58': Abzugswalze
- 59: Abnahmewalze
- 6: Transportband

## Patentansprüche

1. Wiegeeinrichtung zur fortlaufenden Bestimmung des Flächengewichtes von Fasermaterial in Band- oder Vliesform, das aus einer vorgeschalteten faserverarbeitenden Maschine oder einem Fasermaterialbehälter der Wiegeeinrichtung zugeführt und von dieser zu einer nachfolgenden faserverarbeitenden Maschine oder Fasermaterialablage abgeführt wird, **dadurch gekennzeichnet, daß** die Wiegeeinrichtung (1) je einen der Zuführvorrichtung (56, 57) und der Abführvorrichtung (58; 58') zugeordneten Wiegearm (2; 2'; 20; 20') aufweist, der an seinem Ende auf der Zuführseite bezw. der Abführseite um eine ortsfeste Achse (21; 21') schwenkbar gelagert ist, während sich das andere Ende des Wiegearmes (2; 2'; 20; 20') jeweils auf einem separaten Wiegeelement (3;, 3') abstützt.

2. Vorrichtung nach Anspruch 1, **dadurch gekennzeichnet, daß** der Wiegearm (2; 2') sich gelenkig auf dem Wiegeelement (3; 3') abstützt.

3. Vorrichtung nach einem oder mehreren der vorstehenden Ansprüche, **dadurch gekennzeichnet, daß** die Zuführvorrichtung eine Speisewalze (56) aufweist, die mit der Schwenkachse (21; 23) des Wiegearmes (2, 20) in einer Ebene liegt.

4. Vorrichtung nach einem oder mehreren der vorstehenden Ansprüche, **dadurch gekennzeichnet, daß** die Abführvorrichtung eine Abzugswalze (58; 58') aufweist, die mit der Schwenkachse (21'; 23') des Wiegearmes (2'; 20') in einer Ebene liegt.

5. Vorrichtung nach einem oder mehreren der vorstehenden Ansprüche, **dadurch gekennzeichnet, daß** der Wiegearm (2; 2') ein Transportband (22; 22') aufweist, das das Fasermaterial von der Zuführvorrichtung (56, 57) übernimmt bzw. an die Abführvorrichtung (58; 58')

6. Vorrichtung nach Anspruch 5, **dadurch gekennzeichnet, daß** der Wiegearm (20 bzw. 20') um die Achse der Bandumlenkrolle (23, 23') schwenkbar ist.

7. Vorrichtung nach einem oder mehreren der vorstehenden Ansprüche, **gekennzeichnet durch** eine das Gewicht des Wiegearmes (2; 2'; 20; 20') kompensierende Ausgleichsvorrichtung (32; 32').

8. Vorrichtung nach Anspruch 7, **gekennzeichnet durch** eine Einstellvorrichtung (33; 33') zum Ausgleich der Tara.

9. Verfahren zur fortlaufenden Bestimmung des Flächengewichtes von Fasermaterial in Band- oder Vliesform, das aus einer vorgeschalteten, Fasern verarbeitenden Maschine oder einem Fasermaterialbehälter einer Wiegeeinrichtung zugeführt und von dieser zu einer nachfolgenden, Fasern verarbeitenden Maschine oder Fasermaterialablage abgeführt wird, **dadurch gekennzeichnet, daß** das Fasermaterial über zwei einseitig schwenkbar gelagerte und spiegelbildlich angeordnete Wiegearme (2; 2'; 20; 20') geleitet wird, die sich an ihren einander zugewandten Enden jeweils auf einem Wiegeelement (3, 3') abstützen, welche das auf dem Wiegearm (2; 2'; 20; 20') aufliegende Gewicht ermit-telt, und zur Bestimmung des Flächengewichtes das arith-metische Mittel der beiden gemessenen Werte ermittelt wird und entsprechend dem jeweils festgestellten Gewicht die Regelung der Materialtransportgeschwindigkeit im Bereich der Materialzufuhr und der Materialabfuhr erfolgt.

10. Verfahren nach Anspruch 9, **dadurch gekennzeichnet, daß** durch Gewichtsausgleich der Tara jeweils das Nettogewicht des auf dem wiegearm (2; 2'; 20; 20') aufliegenden Fasermaterials ermittelt wird.

## Claims

1. A weighing device for continuously determining the basic weight of fibrous material in a sliver or web form which is fed from a preceding fibre-processing machine or a fibrous-material reservoir to the weighing device and, thence, is discharged to a succeeding fibre-processing machine or place of deposit for fibrous material, **characterized in that** the weighing device (1) has one weighing arm each (2; 2'; 20; 20') associated with the supply device (56, 57) and the discharge device (58; 58') which is pivotally supported about a stationary axis (21; 21') at its end on the supply side and the discharge side whereas the other end of the weighing arm (2; 2'; 20; 20') is supported each on a separate weighing element (3; 3').

2. The device according to claim 1, **characterized in that** the weighing arm (2; 2') is hingedly supported on the weighing element (3; 3').

3. The device according to one or more of the preceding claims, **characterized in that** the supply device has a feed roller (56) which is located in a plane with the pivoting axis (21; 23) of the weighing arm (2, 20).

4. The device according to one or more of the preceding claims, **characterized in that** the discharge device has a draw-off roller (58; 58') which is located in a plane with the pivoting axis (21'; 23) of the weighing arm (2', 20).

5. The device according to one or more of the preceding claims, **characterized in that** the weighing arm (2, 2') has a conveyor belt (22; 22') which takes the fibrous material over from the supply device (56, 57) or delivers it to the discharge device (58; 58').

6. The device according to claim 5, **characterized in that** the weighing arm (20 and 20', resp.) is pivotable about the axis of the belt reversing roller (23, 23').

7. The device according to one or more of the preceding claims, **characterized by** an equalizing device (32; 32') which compensates for the weight of the weighing arm (2; 2'; 20; 20').

8. The device according to claim 7, **characterized by** an adjusting device (33; 33') for equalizing the tare weights.

9. A process for continuously determining the basic weight of fibrous material in a sliver or web form which is fed from a preceding fibre-processing machine or a fibrous-material reservoir to a weighing device and, thence, is discharged to a succeeding fibre-processing machine or place of deposit for fibrous material, **characterized in that** the fibrous material is led over two weighing arms (2; 2'; 20; 20') which are supported to be pivotable to one side and are disposed in a mirror-image fashion which are supported each at on a weighing element (3, 3') at their ends facing each other which determines the weight resting on the weighing arm (2; 2'; 20; 20'), and that the arithmetic mean of the two values measured is determined for a determination of the basic weight and the control of the material conveyance speed is effected, depending on each weight determined, in the area of material supply and material discharge.

10. The device according to claim 9, **characterized in that** the equalization of the tare weights each is used to determine the net weight of the fibrous material resting on the weighing arm (2; 2'; 20; 20').

## Revendications

1. Dispositif de pesage pour la détermination en continu du grammage de matières fibreuses sous forme de bande ou de non-tissé, qui sont amenées d'une machine de traitement de fibres située en amont, ou d'un récipient contenant de la matière fibreuse, vers le dispositif de pesage et qui sont évacuées de celui-ci vers une machine de traitement de fibres située en aval ou vers un dépôt de matières fibreuses, **caractérisé en ce que** le dispositif de pesage (1) comporte, respectivement associé au dispositif d'amenée (56, 57) et au dispositif d'évacuation (58; 58'), un bras de pesage (2; 2'; 20; 20'), l'extrémité de ce bras du côté amenée respectivement du côté évacuation étant montée pivotante autour d'un axe stationnaire (21; 21'), l'autre extrémité du bras de pesage (2; 2'; 20; 20') s'appuyant respectivement sur un élément de pesage (3; 3') distinct.

2. Dispositif selon la revendication 1, **caractérisé en ce que** le bras de pesage (2; 2') est articulé sur l'élément de pesage (3; 3').

3. Dispositif selon l'une ou plusieurs des revendications précédentes, **caractérisé en ce que** le dispositif d'amenée comporte un rouleau d'alimentation (56) qui est disposé dans le même plan que l'axe de pivotement (21; 23) du bras de pesage (2, 20).

4. Dispositif selon l'une ou plusieurs des revendications précédentes, **caractérisé en ce que** le dispositif d'évacuation comporte un rouleau détacheur (58; 58') qui est disposé dans le même plan que l'axe de pivotement (21'; 23') du bras de pesage (2'; 20').

5. Dispositif selon l'une ou plusieurs des revendications précédentes, **caractérisé en ce que** le bras de pesage (2; 2') comporte un tapis de transport (22; 22') reprenant la matière fibreuse du dispositif d'amenée (56, 57) respectivement l'évacuant vers le dispositif d'évacuation (58; 58').

6. Dispositif selon la revendication 5, **caractérisé en ce que** le bras de pesage (20 resp. 20') est pivotable autour de l'axe de la poulie de renvoi (23, 23') du tapis.

7. Dispositif selon l'une ou plusieurs des revendications précédentes, **caractérisé par** un dispositif de compensation (32; 32') compensant le poids du bras de pesage (2; 2'; 20; 20').

8. Dispositif selon la revendication 7, **caractérisé par** un dispositif de régulation (33; 33') pour compenser les tares.

9. Procédé pour la détermination en continu du grammage de matières fibreuses sous forme de bande ou de non-tissé, qui sont amenées d'une machine de traitement de fibres située en amont, ou d'un récipient contenant des matières fibreuses, vers le dispositif de pesage, et qui sont évacuées de celui-ci vers une machine de traitement de fibres située en aval ou vers un dépôt de matières fibreuses, **caractérisé en ce que** les matières fibreuses sont guidées par l'intermédiaire de deux bras de pesage (2; 2'; 20; 20') montés pivotants unilatéralement et disposés de manière inversée l'un par rapport à l'autre, s'appuyant par leurs extrémités respectives en vis-à-vis sur un élément de pesage (3, 3') détectant le poids supporté par le bras de pesage (2; 2'; 20; 20'), et que, pour la détermination du grammage, la moyenne arithmétique des deux valeurs mesurées est détectée, la régulation de la vitesse de transport de matières dans les zones de l'amenée de matières respectivement de l'évacuation de matières étant effectuée selon le poids respectif détecté.

10. Procédé selon la revendication 9, **caractérisé en ce que** le poids net respectif des matières fibreuses supportées par le bras de pesage (2; 2'; 20; 20') est évalué par la compensation pondérale des tares.
